# EUROPÄISCHE PATENTSCHRIFT

(11) **EP 2 156 729 B1**
(45) Veröffentlichungstag und Bekanntmachung des Hinweises auf die Patenterteilung: **25.07.2012**
(21) Anmeldenummer: 09166932.5
(22) Anmeldetag: 31.07.2009
(51) Int. Cl.: A01F 15/10, A01D 89/00

(54) **Niederhaltereinrichtung**
Suppression device
Dispositif d'assujettissement

(30) Priorität: 19.08.2008 DE 102008041331
(43) Veröffentlichungstag der Anmeldung: 24.02.2010
(73) Patentinhaber: DEERE & COMPANY, Moline, Illinois 61265-8098 (US)
(72) Erfinder: Viaud, Jean, 70100, Gray (FR); Chapon, Emmanuel, 70100, Velet (FR); Guillemot, Sébastien, 70100, Montseugny (FR)
(74) Vertreter: Magin, Ludwig Bernhard

(56) Entgegenhaltungen:
- EP-A1- 1 252 813
- EP-A1- 1 413 190
- EP-A1- 1 932 419
- EP-A2- 1 038 431

## Beschreibung

Die Erfindung betrifft eine Niederhaltereinrichtung zum Anbau an eine Erntebergungsmaschine mit zwei im Gutfluss aufeinander folgenden Niederhaltern und eine Erntebergungsmaschine.

Die EP 1 413 190 offenbart eine Rundballenpresse mit einer Pick-up und auf diese folgend einen Überkopfförderer und eine überkopf arbeitende Schneidvorrichtung. Oberhalb der Pick-up und des Überkopfförderers ist jeweils ein Leitblech vorgesehen, von denen das stromabwärts und über dem Überkopfförderer gelegene unter dem Druck des geförderten Ernteguts ausweichen kann. Diese Ausführung ist insofern nachteilig, als sich auf den beiden Leitblechen bröckelndes Erntegut ansammelt, das bei der Transportfahrt auf öffentlichen Straßen herunter geweht wird und die Straßen verschmutzt. Außerdem ist es schwierig, die räumlichen Verhältnisse bei der Zufuhr von Erntegut beim vertikalen Verstellen der Pick-up optimal zu halten.

Aus der EP 1 038 431 geht eine Rundballenpresse mit zwei aufeinander folgenden Niederhaltern oberhalb einer Pick-up und eines Überkopfförderers hervor, die als federnde Zinken ausgebildet sind und sich an die Dicke des Gutstroms anpassen können. Der stromabwärts vorgesehene Niederhalter ist kontrolliert quer zu dem Gutstrom schwenkbar und erstreckt sich bis in eine Presskammer hinein, wobei er sich unterhalb einer Pressrolle am Eingang zur Presskammer erstreckt. Dieser Ausführung haftet der Nachteil an, dass bei dickem Gutstrom das Gut durch die Räume zwischen den Zinken des stromabwärts liegenden Niederhalters hindurchdrückt, so dass es zu einem unerwünschten Gutaufbau kommt.

Die EP 1 252 813 A1 beschreibt eine landwirtschaftliche Erntemaschine mit einer Aufnahmeeinrichtung, die nach oben durch ein Leitorgan begrenzt wird. Das Leitorgan ist grundsätzlich als ein Zinkenrechen aufgebaut, kann an dem stromaufwärts gelegenen Endbereich aber auch mit einer Platte bedeckt werden.

Das der Erfindung zugrunde liegende Problem wird darin gesehen, dass die Gutzufuhr zwischen Pick-up und Presskammer zu Erntegutverlusten führen kann und insgesamt nicht ausreichend zufriedenstellend erfolgt.
Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise gleitet das von dem Überkopfförderer an den stromabwärts gelegenen Niederhalter angedrückte Gut an dessen geschlossener oder zumindest im Wesentlichen geschlossener Oberfläche entlang, was vermeidet, dass es hinausgedrückt wird und auf dem Niederhalter zu liegen kommt. Die geschlossene Fläche sorgt zudem für eine geringe Reibung. Die Oberfläche kann dennoch profiliert oder dergleichen sein und muß soweit geschlossen sein, dass das Gut nicht hindurchtreten kann. Des weiteren kann Erntegut, das durch Öffnungen in einer Presse, einem Häcksler oder dergleichen ausgetreten und auf den Niederhalter gefallen ist, durch die Freiräume des stromaufwärts gelegenen Niederhalters hindurch und wieder in den Gutfluss eintreten. Der stromaufwärts gelegene Niederhalter kann aus federnden Zinken oder Leisten, aus stabilen Stangen oder dergleichen gebildet sein und in seiner Stellung arretiert oder verstellt werden. Ein Anschlagen der Zinken, Stäbe oder dergleichen des stromaufwärts gelegenen Niederhalters an Pressorgane, z. B. eine Pressrolle oder Pressriemen wird vermieden, indem der stromabwärts gelegene Niederhalter zugleich als dessen Wegbegrenzer wirkt. Z. B. könnte der flächige Niederhalter als Bügel oder Dach ausgebildet sein und sich oberhalb der Zinken oder dergleichen erstrecken - mit oder ohne Abstand. Der zulässige Weg der Zinken, etc. kann einstellbar oder fest sein.

Wenn sich beide Niederhalter wenigstens teilweise überlappen, entsteht kein Spalt zwischen ihnen, und das Gut wird kontinuierlich geführt. Der stromaufwärts gelegene Niederhalter kann sich sogar bis über den stromabwärts gelegenen Niederhalter hinaus erstrecken und sogar bis hin zu einer Presskammer. Es wirkt sich dabei positiv auf den Gutfluss aus, wenn sich der stromaufwärts gelegene Niederhalter auf der dem Gutstrom zugewandten Seite befindet. Gegebenenfalls weist der geschlossene oder fast geschlossene stromabwärts gelegene Niederhalter Vertiefungen auf, in die sich die Zinken oder dergl. des stromaufwärts gelegenen Niederhalters einfügen können, so dass die Oberfläche auch bei angelegten Niederhaltern eben bleibt. Wenn sich die Niederhalter auch zumindest teilweise überlappen, so können sie im unbelasteten Zustand dennoch einen Abstand zwischen sich bewahren, z. B. 40 - 50 mm. Der Grad der Überlappung bzw. die Länge des stromaufwärts gelegenen Niederhalters 44 kann über die Breite des Gutstroms auch variieren.

Wenn der stromabwärts gelegene Niederhalter mit dem Träger des stromaufwärts gelegenen Niederhalters verbunden ist, z. B. durch eine Lasche, durch Anschläge, Stützen, Ketten etc. erfolgt eine voneinander abhängige Bewegung, die insbesondere bei fehlender oder geringer Überlappung Unterbrechungen oder Stufen im Gutfluss vermeiden. Bei dem Träger kann es sich um Arme oder dergl. auf jeder Seite handeln, die in der Mitte des stromabwärts gelegenen Niederhalters oder an dessen Vorderseite angreifen und somit evtl. einen sich verjüngenden Keil zur Aufnahme des Förderguts bilden.

Ein Rollenniederhalter - angetrieben oder nicht - vor dem stromaufwärts gelegenen Niederhalter reduziert die Reibung des vorbei gleitenden Guts und erlaubt somit eine höhere Aufnahmegeschwindigkeit. Der Rollenniederhalter kann in herkömmlicher Weise glatt wie auch profiliert ausgebildet sein.

Das Vorsehen von Lagern an dem nachgeschalteten Niederhalter hat den Vorteil, dass er im montierten Zustand verankert und somit stets in der optimalen Zufuhrposition gehalten werden kann. Die Lager können als Lageraugen oder -zapfen, als Bolzen, oder in vergleichbarer Weise ausgebildet werden.

Eine federnde Ausbildung oder Anbringung des flächenhaften, stromabwärts gelegenen Niederhalters bewirkt, dass er nach einer Auslenkung aufgrund eines hohen Gutanfalls wieder automatisch in seine optimale Leitstellung zurückkehrt. In diesem Fall ist eine Verstellung bzw. Anlenkung mittels Lagers und Lenkern nicht erforderlich. Die Federung kann in einem Blech oder einer Kunststoffplatte hervorgerufen werden. Eine federnde Lagerung kann durch eine Einspannung zwischen Federn oder an einer Feder erreicht werden.

Die Führung des Guts an dem flächenhaften Niederhalter kann umso kontrollierter erfolgen, je besser dieser dem darunterliegenden Überkopfförderer folgt. Eine gekrümmte oder gerade Ausbildung ermöglicht es daher, sich an die verschiedenen Typen von Überkopfförderern anzupassen, z. B. an Rotoren, Förderbänder, Zinken auf Kurbelwellen, etc. Erforderlichenfalls kann die Krümmung auch verstellt werden.

Zwar kann die Erfindung an verschiedenen Landmaschinen verwendet werden, z. B. an allen Arten von Pressen, an Pick-Ups von Feldhäckslern, an Ladewagen, etc.; die beste Wirkung hat sie jedoch an einer Rundballenpresse jeglicher Bauart, da dort das Gut unmittelbar von einer Pick-Up in den Pressraum geführt wird. Die Niederhaltereinrichtung stellt eine in sich abgeschlossene Baueinheit dar, die auch an bestehende Gutaufnehmer angebauten werden kann.

Zwar entfaltet die Kombination von flächenhaftem und durchbrochenem Niederhalter an verschiedenen Stellen seine Wirkung; im Bereich eines Überkopfförderers bestand im Stand der Technik jedoch die Gefahr, dass das Gut zwischen den Zinken hindurch gedrückt wird, was mit einem flächenhaften Niederhalter in dessen Wirkbereich aber vermieden wird.

Wenn der Träger der Niederhaltereinrichtung und/oder der stromabwärts gelegene Bereich des flächenhaften stromabwärts gelegenen Niederhalters an einem Erntegutaufnehmer oder einem Rahmen der Erntebergungsvorrichtung vertikal schwenkbar angebracht ist, findet beim Anheben des Erntegutaufnehmers eine Anpassung der Stellung der Niederhalter an die Förderfläche des Erntegutaufnehmers statt, so dass der Gutfluss gewahrt bleibt. Dabei ist eine Vielfalt an Anlenkungsmöglichkeiten gegeben, wobei insbesondere der Schwenkanschluss des flächigen Niederhalters an den Rahmen dafür sorgt, dass stets ein sich erweiternder Zuführungsquerschnitt vor dem Eintritt in den Pressraum gewahrt bleibt.

In der Zeichnung ist ein nachfolgend näher beschriebenes Ausführungsbeispiel der Erfindung dargestellt. Es zeigt:
- Fig. 1: eine Erntebergungsmaschine in Seitenansicht mit einer Niederhaltereinrichtung und
- Fig. 2: die Niederhaltereinrichtung nach Figur 1 in perspektivischer Ansicht.

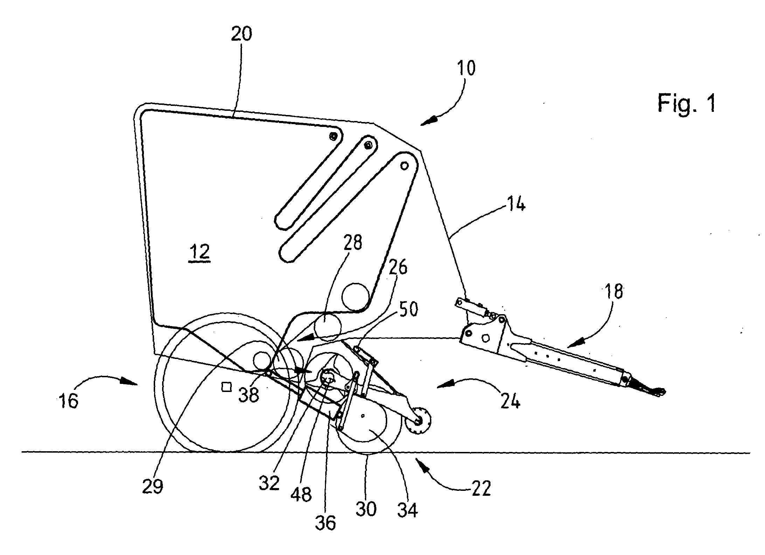

Eine in Figur 1 gezeigte Erntebergungsmaschine 10 ist in der Art einer Rundballenpresse mit variabler Presskammer 12 ausgebildet, die einen Rahmen 14, ein Fahrgestell 16, eine Deichsel 18, Presselemente 20, einen Gutaufnehmer 22 und eine Niederhaltereinrichtung 24 aufweist.

Die Erntebergungsmaschine 10 ist im Wesentlichen herkömmlich ausgebildet und nimmt in Schwaden auf dem Boden liegendes Erntegut auf, um es in Ballen zu pressen. Die Dichte und Höhe des Schwads verändert sich mehr oder weniger über seine Länge, wie sich auch die Bodenkontur ändert.

Die Presskammer 12 ist im Innern der Erntebergungsmaschine 10 gebildet und weist vorne unten einen Einlass 26 auf.

Der Rahmen 14 setzt sich aus mehreren verschweißten oder verschraubten Bestandteilen zusammen, die sich auf dem Fahrgestell 16 abstützen und mittels der Deichsel 18 an einen Ackerschlepper oder dergleichen zur Fahrt über das Feld angeschlossen werden. An dem Rahmen 14 sind Lager 48 und 50 angeordnet, die sowohl in der horizontalen, wie auch in der vertikalen Richtung einen Abstand zueinander aufweisen.

Die Presselemente 20 sind in diesem Ausführungsbeispiel als Riemen ausgebildet, die den Umfang der Presskammer 12 definieren und unter anderem über eine Rolle 28 geführt werden, die die obere Grenze des Einlasses 26 bildet und der gegenüber eine Rolle 29 mit gleicher Ausrichtung vorgesehen ist, zu der sich die Presselemente 20 beim Beginn des Pressvorgangs geradlinig erstrecken, um später von dem ankommenden Erntegut ausgelenkt zu werden. Anstatt von oder zusätzlich zu Riemen könnten auch Rollen als Presselemente 20 vorgesehen werden.

Der Gutaufnehmer 22 ist in seinem vorderen Bereich mit einem umlaufenden Zinkenrotor 30 versehen, der auf dem Boden liegendes Gut anhebt und nach hinten zu dem Einlass 26 fördert und wird herkömmlicherweise als eine Pick-Up bezeichnet. Der Gutaufnehmer 22 ist um ein Lager 32 vertikal an den Rahmen 14 angelenkt und folgt mittels nicht gezeigter Stützräder oder berührungslosen Sensoren der Bodenkontur. Da das Fahrgestell 16 und die Stützräder einen Abstand in der Fahrtrichtung aufweisen, wird der Gutaufnehmer 22 bei Bodenunebenheiten eine Bewegung relativ zu dem Rahmen 14 ausführen. Zudem kann der Gutaufnehmer 22 mittels einer Stellvorrichtung 36 in eine Transportstellung angehoben werden, in der er den Boden nicht mehr berührt. In seinem rückwärtigen Bereich ist der Gutaufnehmer 22 mit einem Überkopfförderer 38 versehen, der z. B. in der EP 0803184 B1 beschrieben ist. Dieser Überkopfförderer 38 befindet sich derart in einer Entfernung zu dem Einlass 26 einerseits und dem Zinkenrotor 30 andererseits, dass eine sichere Förderung des Guts vom Boden zu dem Einlass 26 gewährleistet ist.

Die soweit beschriebene Erntebergungsmaschine 10 entspricht bekannter Bauart.

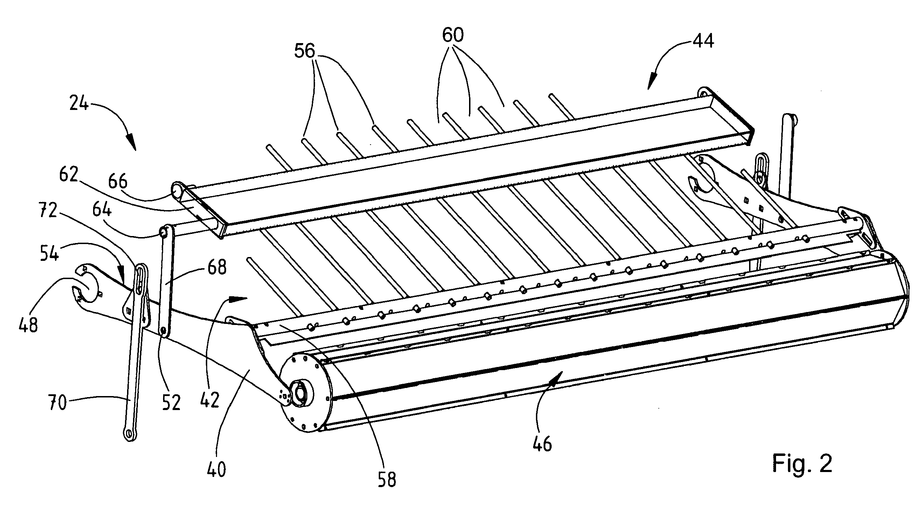

Die Niederhaltereinrichtung 24 ist übersichtlich in Figur 2 dargestellt und wird anhand derer beschrieben. Die Niederhaltereinrichtung 24 enthält jedenfalls Träger 40 in der Form von Armen, einen stromaufwärts gelegenen Niederhalter 42, einen stromabwärts gelegenen Niederhalter 44 und in diesem Ausführungsbeispiel auch einen vorgeschalteten Rollenniederhalter 46. Die Niederhaltereinrichtung 24 ist eine in sich geschlossene Baueinheit, die wahlweise an Gutaufnehmer 22 angebaut werden kann. Die Breite der Niederhalter 42, 44, 46, des Zinkenrotors 30 und des Überkopfförderers 38 ist im Wesentlichen gleich.

Die Träger 40 sind als stabile Stahlblechstreifen ausgebildet, die sich im Wesentlichen hochkant und horizontal von dem Lager 48 bis zu dem Rollenniederhalter 46 erstrecken und somit die Länge des Gutaufnehmers 22 im Wesentlichen überspannen. Ungefähr in der Mitte befindet sich jeweils ein Lager 52, und zwischen diesem Lager 52 und dem Lager 48 befindet sich ein weiteres Lager 54. Die Lager 52 und 54 bestehen in einfacher Form aus Zapfen, Schrauben, Bolzen oder dergleichen. Insgesamt ist auf jeder Seite des Gutaufnehmers 22 ein Träger 40 vorgesehen, der sich parallel zu dem anderen Träger 40 erstreckt.

Der stromaufwärts gelegene Niederhalter 42 ist in der Art eines Rechens mit einer Vielzahl von Zinken 56 ausgebildet, die sich radial von einem Zinkenträger 58 weg erstrecken. In diesem Ausführungsbeispiel erstrecken sich die äußeren Zinken 56 bis fast an den stromabwärts gelegenen Niederhalter 44, während sich die inneren über diesen hinaus erstrecken und sich somit auch abschnittsweise mit ihm decken. Die Zinken 56 sind gerade ausgebildet, könnten aber ebenso geschwungen, geknickt oder sonstwie geformt sein, und verhalten sich federnd. Der Zinkenträger 58 erstreckt sich zwischen den beiden Armen 40 und ist endseitig mit diesen verschraubt oder verschweißt; erforderlichenfalls ist er gegenüber den Armen 40 einstellbar. In dem gezeigten Ausführungsbeispiel schließt die Haupterstreckungsebene der Zinken 56 gegenüber der Längsmittenachse der Arme 40 einen Winkel von 10 bis 15 Grad ein. Der Zinkenträger 58 weißt nur einen geringen Abstand zu der Umfangsfläche des Rollenniederhalters 46 auf, so dass es nicht zu Gutverstopfungen kommen kann. Die Zinken 56 lassen zwischen sich Öffnungen 60 oder Zwischenräume, die ausreichend groß sind, auf ihnen befindliches restliches Erntegut hindurchtreten zu lassen, was gegebenenfalls durch das Vibrieren der Zinken 56 unterstützt wird.

Der stromabwärts gelegene Niederhalter 44 ist vollflächig oder nahezu vollflächig ausgebildet, z. B. als ein Blech, eine Kunststoffplatte oder dergleichen. Allerdings könnten auch kleine Unterbrechungen vorhanden sein, sofern sie dem Erntegut keine Möglichkeit geben, hindurchzutreten, bzw. solange sie keinen erhöhten Widerstand auf das entlanggleitende Erntegut ausüben oder dieses sogar beschädigen. Um gegen die Kräfte des angepressten Ernteguts gewappnet zu sein, ist der Niederhalter 44 entweder mit Versteifungsrippen bzw. -kanten versehen oder doppelwandig ausgebildet oder dergleichen. Der Niederhalter 44 erstreckt sich über eine Länge von 0,2 - 0,4 m zwischen dem Rollenniederhalter 46 und dem Einlass 26 oberhalb des stromaufwärts gelegenen Niederhalters 42 und über dessen gesamte Breite. Zwischen der Oberseite des stromaufwärts gelegenen Niederhalters 42 und der Unterseite des stromabwärts gelegenen Niederhalters 44 kann - muss aber nicht - normalerweise ein Abstand von ca. 40 - 60 mm bestehen. In beiden Endbereichen ist an Seitenwangen 62 des stromabwärts gelegenen flächigen Niederhalters 44 ein vorderes Lager 64 und ein rückwärtiges Lager 66 vorgesehen, wobei das vordere Lager 64 als ein Zapfen und das rückwärtige Lager 66 als eine Bohrung ausgeführt ist. Zwischen dem vorderen Lager 64 und dem Lager 52 auf dem betreffenden Arm 40 erstreckt sich ein in sich steifer Lenker 68 in der Art einer gelenkig angeschlossenen Stahlblechlasche. Das rückwärtige Lager 66 kann mittels einer Schraube oder dergleichen an das Lager 50 an dem Rahmen 14 angeschlossen werden.

Der Rollenniederhalter 46 ist als eine profilierte oder glatte Walze ausgebildet, die frei drehbar in den vorderen Endbereichen der Arme 40 gelagert ist.

Das Lager 54 dient der gelenkigen Verbindung mit einem Endbereich einer Strebe 70, die anderenends mit Seitenwangen 34 des Gutaufnehmers 22 verbunden ist und in einem Endbereich - in diesem Fall in dem oberen - einen Schlitz 72 an das Lager 54 schwenkbar angeschlossen ist. Die Verwendung des Schlitzes 72 erlaubt eine begrenzte aufwärts gerichtete Bewegung, damit sich die Niederhaltereinrichtung 24 an unterschiedliche Schwaddicken anpassen kann. Andererseits ist es auf diese Weise möglich, stets einen Mindestabstand zwischen dem Gutaufnehmer 22 und dem Überkopfförderer 38 einzuhalten. Aus Figur 2 ist auch ersichtlich, dass ein breiter Streifen zwischen dem Rollenniederhalter 46 und dem stromabwärts gelegenen Niederhalter 44 nur von den Zinken 56 überstrichen wird, so dass große Zwischenräume bestehen, durch die insbesondere bröckelndes Erntegut in den Gutstrom zurückfallen kann. Andererseits befindet sich der stromabwärts gelegene Niederhalter 44 stets innerhalb eines von dem Schlitz 72 begrenzten Bewegungsrahmen oberhalb des Überkopfförderers 38 und sorgt mit seiner geschlossenen oder fast geschlossenen Oberfläche dafür, dass das Gut sicher und schnell zu dem Einlass 26 gefördert wird.

Nach alledem ergibt sich folgende Funktion.

Um Gut vom Boden aufzunehmen, wird der Gutaufnehmer 22 der Erntebergungsmaschine 10 auf einem Feld auf den Boden abgesenkt und entlang eines Schwads bewegt, so dass der Zinkenrotor 30 das Gut anheben und über den Überkopfförderer 38 zu dem Einlass 26 fördern kann. Auf diesem Weg wird der aufgenommene Gutstrom an seiner Oberseite von den Niederhaltern 42, 44 und soweit vorhanden auch von dem Rollenniederhalter 46 begrenzt. Insbesondere aus Figur 2 ist zu erkennen, dass ein Anheben der Niederhaltereinrichtung 24 infolge der Schwaddichte zu einer Schwenkbewegung der Arme 40 nach oben um das Lager 48 führen wird. Diese Schwenkbewegung wird mittels der Lenker 68 über die vorderen Lager 64 auf die Vorderseite des Niederhalters 44 übertragen, der nun ebenfalls um das Lager 66 nach oben schwenken wird. Da der stromaufwärts gelegene Niederhalter 42 starr mit den Armen 40 verbunden ist, bewegt er sich mit diesen, ohne allerdings seine relative Lage ihnen gegenüber zu verändern. Je nach der Höhe des Schwads werden die Zinken 56 nach oben ausgelenkt und bewegen sich zu der Unterseite des stromabwärts gelegenen Niederhalters 44 hin; im schlimmsten Fall schlagen sie an diesen an, so dass dieser als Wegbegrenzer funktioniert.

## Patentansprüche

1. Niederhaltereinrichtung (24) zum Anbau an eine Erntebergungsmaschine (10) mit zwei im Gutfluss aufeinander folgenden Niederhaltern (42), (44), wobei ein stromabwärts gelegener Niederhalter (44) zumindest im Wesentlichen flächenhaft ausgebildet ist, ein stromaufwärts gelegener Niederhalter (42) mit Öffnungen (60) versehen ist und der stromabwärts gelegene Niederhalter (44) als Wegbegrenzer des stromaufwärts gelegenen Niederhalters (42) wirkt.

2. Niederhaltereinrichtung nach Anspruch 1, **dadurch gekennzeichnet, dass** sich beide Niederhalter (42), (44) wenigstens teilweise überlappen.

3. Niederhaltereinrichtung nach Anspruch 1 oder 2, **dadurch gekennzeichnet, dass** der stromabwärts gelegene Niederhalter (44) mit dem Träger (40) des stromaufwärts gelegenen Niederhalters (42) verbunden ist.

4. Niederhaltereinrichtung nach einem oder mehreren der vorherigen Ansprüche, **dadurch gekennzeichnet, dass** dem stromaufwärts gelegenen Niederhalter (42) ein Rollenniederhalter (46) vorgeschaltet ist.

5. Niederhaltereinrichtung nach einem oder mehreren der vorherigen Ansprüche, **dadurch gekennzeichnet, dass** der stromabwärts gelegene Niederhalter (44) an seinem stromabwärts gelegenen Endbereich Lager (50) aufweist.

6. Niederhaltereinrichtung nach einem oder mehreren der vorherigen Ansprüche, **dadurch gekennzeichnet, dass** der stromabwärts gelegene Niederhalter (44) federnd ausgebildet oder federnd gelagert ist.

7. Niederhaltereinrichtung nach einem oder mehreren der vorherigen Ansprüche, **dadurch gekennzeichnet, dass** der stromabwärts gelegene Niederhalter (44) gerade oder gekrümmt ausgebildet ist.

8. Erntebergungsmaschine (10) mit einer Niederhaltereinrichtung nach einem oder mehreren der vorherigen Ansprüche, insbesondere Rundballenpresse.

9. Erntebergungsmaschine nach Anspruch 8, **dadurch gekennzeichnet, dass** sich der stromabwärts gelegene flächenhafte Niederhalter 44 oberhalb eines Überkopfförderers 38 erstreckt.

10. Erntebergungsmaschine nach Anspruch 8 oder 9, **dadurch gekennzeichnet, dass** der Träger (40) der Niederhaltereinrichtung (24) und/oder der stromabwärts gelegenen Bereich des flächenhaften stromabwärts gelegenen Niederhalters (44) an einem Gutaufnehmer (22) oder einem Rahmen (14) der Erntebergungsmaschine vertikal schwenkbar angebracht ist.

## Claims

1. Holding-down device (24) for attaching to a harvesting machine (10), having two holding-down means (42), (44) successive in the flow of crop, wherein a downstream holding-down means (44) is formed in an at least substantially two-dimensional manner, an upstream holding-down means (42) is provided with openings (60) and the downstream holding-down means (44) acts as a travel limiter for the upstream holding-down means (42).

2. Holding-down device according to Claim 1, **characterized in that** the two holding-down means (42), (44) at least partially overlap.

3. Holding-down device according to Claim 1 or 2, **characterized in that** the downstream holding-down means (44) is connected to the support (40) of the upstream holding-down means (42).

4. Holding-down device according to one or more of the preceding claims, **characterized in that** a roller holding-down means (46) is connected in front of the upstream holding-down means (42).

5. Holding-down device according to one or more of the preceding claims, **characterized in that** the downstream holding-down means (44) has bearings (50) at its downstream end region.

6. Holding-down device according to one or more of the preceding claims, **characterized in that** the downstream holding-down means (44) is formed in a resilient manner or is mounted in a resilient manner.

7. Holding-down device according to one or more of the preceding claims, **characterized in that** the downstream holding-down means (44) is formed in a straight or curved manner.

8. Harvesting machine (10) having a holding-down device according to one or more of the preceding claims, in particular a round baler.

9. Harvesting machine according to Claim 8, **characterized in that** the downstream two-dimensional holding-down means (44) extends above an overhead conveyor (38).

10. Harvesting machine according to Claim 8 or 9, **characterized in that** the support (40) of the holding-down device (24) and/or the downstream region of the two-dimensional downstream holding-down means (44) is attached in a vertically pivotable manner to a pick-up (22) or to a frame (14) of the harvesting machine.

## Revendications

1. Dispositif de maintien vers le bas (24) destiné à être monté sur une machine de récupération de récolte (10), doté de deux éléments de maintien vers le bas (42), (44) consécutifs dans le flux de produits, un élément de maintien vers le bas (44) situé en aval étant réalisé au moins sensiblement sous forme plane, un élément de maintien vers le bas (42) situé en amont étant pourvu d'ouvertures (60) et l'élément de maintien vers le bas (44) situé en aval agissant en tant que limiteur de course de l'élément de maintien vers le bas (42) situé en amont.

2. Dispositif de maintien vers le bas selon la revendication 1, **caractérisé en ce que** les deux éléments de maintien vers le bas (42), (44) se chevauchent au moins partiellement.

3. Dispositif de maintien vers le bas selon la revendication 1 ou 2, **caractérisé en ce que** l'élément de maintien vers le bas (44) situé en aval est relié au support (40) de l'élément de maintien vers le bas (42) situé en amont.

4. Dispositif de maintien vers le bas selon l'une quelconque ou plusieurs des revendications précédentes, **caractérisé en ce qu'**un égalisateur à rouleau (46) est monté avant l'élément de maintien vers le bas (42) situé en amont.

5. Dispositif de maintien vers le bas selon l'une quelconque ou plusieurs des revendications précédentes, **caractérisé en ce que** l'élément de maintien vers le bas (44) situé en aval comprend des paliers (50) au niveau de sa région d'extrémité située en aval.

6. Dispositif de maintien vers le bas selon l'une quelconque ou plusieurs des revendications précédentes, **caractérisé en ce que** l'élément de maintien vers le bas (44) situé en aval est réalisé de manière élastique ou est monté sur ressort.

7. Dispositif de maintien vers le bas selon l'une quelconque ou plusieurs des revendications précédentes, **caractérisé en ce que** l'élément de maintien vers le bas (44) situé en aval est rectiligne ou courbe.

8. Machine de récupération de récolte (10) dotée d'un dispositif de maintien vers le bas selon l'une quelconque ou plusieurs des revendications précédentes, en particulier presse à balles rondes.

9. Machine de récupération de récolte selon la revendication 8, **caractérisée en ce que** l'élément de maintien vers le bas (44) plan situé en aval s'étend au-dessus d'un convoyeur par le haut (38).

10. Machine de récupération de récolte selon la revendication 8 ou 9, **caractérisée en ce que** le support (40) du dispositif de maintien vers le bas (24) et/ou la région située en aval de l'élément de maintien vers le bas (44) plan situé en aval sont montés de manière à pouvoir pivoter verticalement sur un ramasseur (22) ou un châssis (14) de la machine de récupération de récolte.
